# EUROPÄISCHE PATENTSCHRIFT

(11) **EP 1 925 471 B1**
(45) Veröffentlichungstag und Bekanntmachung des Hinweises auf die Patenterteilung: **28.04.2010**
(21) Anmeldenummer: 07017823.1
(22) Anmeldetag: 12.09.2007
(51) Int. Cl.: B60G 17/015, B60G 17/016, B60G 17/018

(54) **Verfahren zur Niveauregelung eines pneumatisch gefederten Fahrzeuges**
Method for level adjustment of a pneumatically sprung vehicle
Procédé de réglage des niveaux d'un véhicule à ressort pneumatique

(30) Priorität: 22.11.2006 DE 102006054976
(43) Veröffentlichungstag der Anmeldung: 28.05.2008
(73) Patentinhaber: WABCO GmbH, 30432 Hannover (DE)
(72) Erfinder: Kleen, Berend, 30161 Hannover (DE); Lucas, Johann, 31319 Sehnde (DE)
(74) Vertreter: Günther, Constantin

(56) Entgegenhaltungen:
- EP-A- 0 318 013
- EP-A- 0 530 755
- EP-A- 0 779 166
- EP-A- 0 956 982
- EP-A- 1 028 011
- WO-A-2006/005645
- DE-A1- 19 640 149

## Beschreibung

Die Erfindung betrifft ein Verfahren zur Niveauregelung eines pneumatisch gefederten Fahrzeuges, insbesondere eines Nutzfahrzeuges.

Bei der Niveauregelung von Fahrzeugen werden die Niveauhöhen der pneumatisch gefederten Räder gemessen und über die Luftfedern bzw. Luftbälge an den Rädern entsprechend geregelt, wenn vorgegebene Niveautoleranzen überschritten werden. Hierdurch können auftretende Belastungen, insbesondere asymmetrische Belastungen ausgeglichen werden.

Es zeigt sich jedoch, dass insbesondere bei Kurvenfahrten eine häufige Regelung mit hohem Druckluft - und somit Treibstoffverbrauch erfolgt, da die in den Kurven auftretenden Querbeschleunigungen zu entsprechenden Belastungen an den einzelnen Rädern führen.

Das Dokument EP 0 318 013 A2 offenbart ein Niveauregelsystem für ein Fahrzeug mit einem Sensor zur Überwachung der Höhe des Fahrzeugaufbaus und einer Steuereinrichtung zur Festsetzung eines Zielhöhenbereiches des Fahrzeugs, wobei Längs-, Quer- und Vertikalbeschleunigungen überwacht und der Zielhöhenbereich entsprechend einer dieser Beschleunigungen eingestellt wird.

Das Dokument EP 0 530 755 A1 offenbart ein Niveauregelsystem für Kraftfahrzeuge mit einer Regelschaltung, die in Abhängigkeit von einem Sollwert und einem Istwert der Aufbauhöhe unter Berücksichtigung einer zulässigen Abweichung zwischen Soll- und Istwert Ventilsteuersignale zur Regelung des Niveaus erzeugt. Des weiteren umfasst das Niveauregelsystem einen die Änderungen der Längs- und der Querbeschleunigung des Fahrzeugaufbaus auswertenden Schaltkreis, dessen Ausgangssignal den Sollwert der Aufbauhöhe verschiebt, wenn die Querbeschleunigung einen Schwellwert überschreitet. Außerdem ist ein die Längs- und Querbeschleunigung des Fahrzeugaufbaus auswertender Schaltkreis vorhanden, dessen Ausgangssignal die zulässige Abweichung des Istwerts von dem Sollwert der Aufbauhöhe variiert.

Geradeaus-Fahrten bzw. Kurvenfahrten mit geringer Querbeschleunigung, d. h. geringer Fahrgeschwindigkeit und/oder großem Radius, eine Niveauregelung in relativ engen Niveautoleranzen durchgeführt werden, so dass es zu keinen ungleichmäßigen Beladungszuständen kommt, bei höheren Querbeschleunigungen jedoch die auftretenden Niveauunterschiede zumindest in größeren Toleranzgrenzen zugelassen werden.

Vorteilhafterweise ist eine spezielle Kennlinie für die Abhängigkeit der Sollniveau-Toleranz von der Querbeschleunigung vorgesehen. Hierbei können Kennlinien für die untere und obere Grenze vorgesehen sein.

Erfindungsgemäß wird ein Querbeschleunigungs-Grenzwert festgesetzt, wobei bei Unterschreiten des Querbeschleunigungs-Grenzwertes in herkömmlicher Weise feste Sollniveau-Toleranzen bzw. Niveautoleranzgrenzen festgelegt werden. Alternativ hierzu ist es erfindungsgemäß jedoch auch möglich, die Niveautoleranzgrenzen auch bei geringeren Querbeschleunigungen fortlaufend anzupassen.

Gemäß einer bevorzugten Ausführungsform wird bei der Vergrößerung der Sollniveau-Toleranzen zwischen den beiden Fahrzeugseiten unterschieden. Hierbei kann insbesondere an der kurveninneren Seite eine andere Sollniveau-Toleranz als an der kurvenäußeren Seite festgesetzt werden. Hierbei kann angesetzt werden, dass an der kurveninneren Seite im Allgemeinen eine Niveauerhöhung und an der kurvenäußeren Seite im Allgemeinen eine Niveauabsenkung zu erwarten ist, so dass vorteilhafterweise nicht allgemein die Toleranzbänder vergrößert oder verkleinert werden, sondern eine asymmetrische Veränderung der Sollniveau-Toleranz erfolgt. Somit kann an der kurveninneren Seite eine größere Sollniveau-Toleranz nach oben und an der kurvenäußeren Seite eine größere Sollniveau-Toleranz nach unten festgesetzt werden.

Die Querbeschleunigung kann insbesondere aus den Raddrehzahlen ermittelt werden, die z. B. durch das ABS zur Verfügung gestellt werden. Hierbei ist insbesondere eine Differenz der kurvenäußeren und kurveninneren Raddrehzahlen relevant.

Die Querbeschleunigung kann weiterhin auch durch einen Querbeschleunigungssensor ermittelt werden. Weiterhin ist es grundsätzlich auch möglich, einen Gierratensensor zur Ermittlung der Gierrate des Fahrzeuges heranzuziehen und aus seinem Messwert und der Bahngeschwindigkeit die Querbeschleunigung zu ermitteln. Weiterhin kann ein Lenkwinkelsensor verwendet werden.

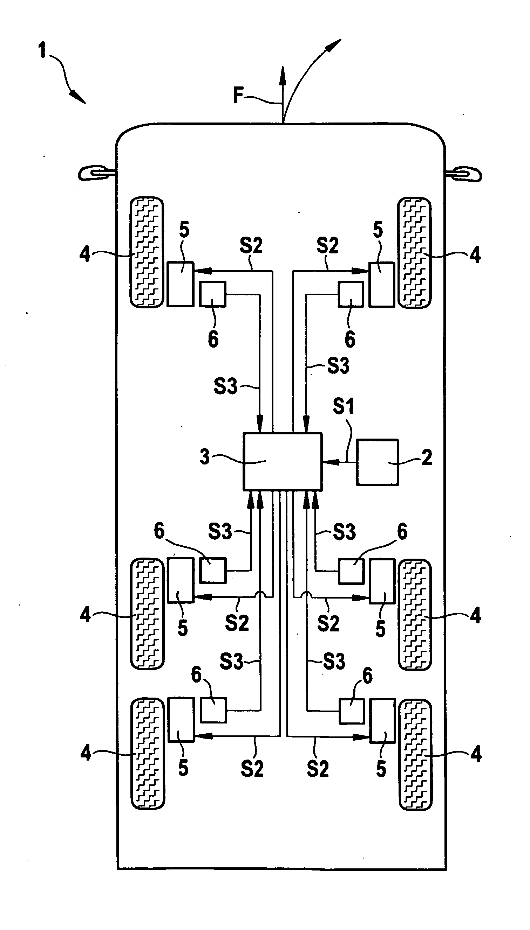

Die Erfindung wird im Folgenden anhand der beiliegenden Zeichnung an einer Ausführungsform erläutert. Die Figur zeigt eine Draufsicht auf ein Fahrzeug bei Durchführung des erfindungsgemäßen Verfahrens.

Ein Fahrzeug 1 - in der Figur ist beispielhaft ein Nutzfahrzeug 1 mit sechs Rädern 4 gezeigt - fährt in einer Rechtskurve mit einer aktuellen Fahrtrichtung F. Ein Querbeschleunigungssensor 2 detektiert eine Querbeschleunigung a_{y} = d/dt · v_{y}(t) und sendet Messsignale S1 an eine Steuereinrichtung 3, die weiterhin von Niveau- Messeinrichtungen 6 z. B. induktiv ermittelte Niveau-Messwerte S3 der Niveauhöhen hi der Räder 4 aufnimmt.

In dem Fahrzeug 1 sind in an sich bekannter Weise Luftbälge 5 zur Niveaueinstellung vorgesehen, deren Balgdrücke über Stellsignale S2 der Steuereinrichtung 3 gesteuert werden, d. h. durch Ansteuerung von Einlassventilen und Auslassventilen der Luftbälge 5, die die Luftzufuhr von einem zentralen Luftdruckspeicher steuern.

Anstelle eines Querbeschleunigungssensor 2 kann grundsätzlich auch ein Gierratensensor vorgesehen sein, so dass die Querbeschleunigung aus der gemessenen Gierrate ω und der Fahrtgeschwindigkeit bzw. Bahngeschwindigkeit v ermittelt wird, d. h. gemäß a_{y} = v²/r = ω²·r = v·ω.

Weiterhin können die z. B. für das ABS ermittelten Raddrehzahlen zur Ermittlung der Querbeschleunigung herangezogen werden.

An jedem Luftbalg 5 ist ein Niveautoleranzband mit einer unteren Grenze h1 und einer oberen Grenze h2 für die Luftbälge 5 festgelegt, bei dessen Über- bzw. Unterschreitung die Niveauregelung mit entsprechender Korrektur einsetzt.

Erfindungsgemäß werden die Niveautoleranzgrenzen h1, h2 und somit das von ihnen definierte Niveautoleranzband in Abhängigkeit der Querbeschleunigung ay(t) festgelegt.

Die Einstellung der Niveautoleranzen, innerhalb von denen keine Regelung vorgenommen wird, wird erfindungsgemäß vorteilhafterweise mittels einer Kennlinie durchgeführt. Hierbei können verschiedene Regelungen vorgesehen sein z. B. die folgende:

Unterhalb eines Querbeschleunigungs-Grenzwertes ayg wird eine herkömmliche Niveauregelung mit vorgegebenen Niveautoleranzgrenzen h1, h2 durchgeführt. Oberhalb des Grenzwertes, d. h. bei ay(t) > ayg wird auf eine relevante Kurvenfahrt erkannt, so dass die Niveautoleranzgrenzen h1, h2 verändert werden. Sie können vorteilhafterweise von dem jeweiligen Querbeschleunigungswert ay abhängen, z. B. mit ay steigen; dies kann eine lineare oder auch nicht lineare Abhängigkeit sein. Weiterhin kann erfindungsgemäß auch ein diskrete Unterteilung getroffen werden, bei der oberhalb des Grenzwertes ayg ein größeres Toleranzband mit festen Grenzen gewählt wird.

Grundsätzlich kann jedoch auch schon bei kleinen Querbeschleunigungen ay(t) eine Änderung der Niveautoleranzgrenzen vorgenommen werden, d.h. ayg=0 gesetzt werden.

Die Querbeschleunigung ay führt dazu, dass der gesamte Aufbau des Fahrzeuges 1 durch seine Trägheit gegenüber dem Fahrwerk zeitweise eine veränderte Position einnimmt, wobei die kurveninneren - in der Figur rechten - Luftbälge 5 auf eine höhere Niveaueinstellung hin gezogen werden als die kurvenäußeren Luftbälge 5.

Die erfindungsgemäße Regelung kann diese Unterschiede beim kurveninneren und kurvenäußeren Rad 4 bzw. kurveninneren und kurvenäußeren Luftbalg 5 berücksichtigen, so dass für die kurveninneren und kurvenäußeren Luftbälge 5 unterschiedliche Kennlinien festgelegt sind. Hierbei werden vorzugsweise den kurveninneren Luftbälgen 5 jeweils höhere Werte h1, h2, d.h. ein nach oben verschobenes Toleranzband, oder auch nur eine nach oben verschobene obere Toleranzgrenze h2 bei unveränderter unterer Toleranzgrenze h1 zugeteilt, und entsprechend den kurvenäußeren Luftbälgen 5 ein nach unten verschobenes Toleranzband, oder auch nur eine nach unten verschobene untere Toleranzgrenze h1 bei unveränderter oberer Toleranzgrenze h2 zugeteilt.

## Patentansprüche

1. Verfahren zur Niveauregelung eines pneumatisch gefederten Fahrzeuges (1), bei dem
Niveauwerte (hi) des Fahrzeugaufbaus ermittelt und durch Ansteuerung von Luftbälgen (5) innerhalb von Sollniveau-Toleranzgrenzen (h1, h2) geregelt werden, wobei
eine Querbeschleunigung (ay(t)) des Fahrzeuges (1) ermittelt wird, und
die Sollniveau-Toleranzgrenzen (h1, h2) in Abhängigkeit von der ermittelten Querbeschleunigung (ay(t)) festgesetzt werden, **dadurch gekennzeichnet, dass** an der kurveninneren Fahrzeugseite und der kurvenäußeren Fahrzeugseite unterschiedliche Sollniveau-Toleranzgrenzen (h1, h2) festgesetzt werden, wobei an der kurveninneren Seite die obere Sollniveau-Toleranzgrenze (h1) weiter nach oben festgesetzt wird als an der kurvenäußeren Seite und/oder an der kurvenäußeren Seite die untere Sollniveau- Toleranzgrenze (h2) tiefer als an der kurveninneren Seite festgesetzt wird.

2. Verfahren nach Anspruch 1, **dadurch gekennzeichnet, dass** die Querbeschleunigung (ay(t)) aus Raddrehzahlen, insbesondere Differenzwerten von Raddrehzahlen, ermittelt wird.

3. Verfahren nach Anspruch 1, **dadurch gekennzeichnet, dass** die Querbeschleunigung (ay(t)) unter Verwendung eines Querbeschleunigungssensors (2) und/oder Gierratensensors und/oder Lenkwinkelsensors ermittelt wird.

4. Verfahren nach einem der vorherigen Ansprüche, **dadurch gekennzeichnet, dass** die Abhängigkeit der Sollniveau-Toleranzgrenzen (h1, h2) von der Querbeschleunigung (ay(t)) durch eine Kennlinie festgelegt wird.

5. Verfahren nach einem der vorherigen Ansprüche, **dadurch gekennzeichnet, dass** bei höheren Querbeschleunigungen (ay(t)) ein größere Breite (h2-h1) des Sollniveau-Toleranzbandes (h1, h2) festgesetzt wird.

6. Verfahren nach einem der vorherigen Ansprüche, **dadurch gekennzeichnet, dass** das Toleranzband (h1, h2) in Abhängigkeit der Querbeschleunigung (ay(t)) verschoben wird.

7. Verfahren nach Anspruch 6, **dadurch gekennzeichnet, dass** das Sollniveau-Toleranzband (h1, h2) an der kurveninneren Seite nach oben und an der kurvenäußeren Seite nach unten verschoben wird.

8. Verfahren nach einem der vorherigen Ansprüche, **dadurch gekennzeichnet, dass** ein Querbeschleunigungs-Grenzwert (ayg) gesetzt wird, wobei bei Unterschreiten des Querbeschleunigungs-Grenzwertes (ayg) keine Änderungen der Sollniveau-Toleranzgrenzen (h1, h2) erfolgt und oberhalb des Querbeschleunigungs-Grenzwertes (ayg) die Sollniveau-Toleranzgrenzen (h1, h2) in Abhängigkeit von der ermittelten Querbeschleunigung (ay(t)) festgesetzt werden.

## Claims

1. Method for level control of a pneumatic-suspension vehicle (1), in which level values (hi) of the vehicle structure are determined and controlled within desired level tolerance limits (h1, h2) by driving air bellows (5), a lateral acceleration (ay(t)) of the vehicle (1) being determined, and the desired level tolerance limits (h1, h2) being set as a function of the determined lateral acceleration (ay(t)), **characterized in that** different desired value tolerance limits (h1, h2) are set on the side of the vehicle on the inside of the bend and the side of the vehicle on the outside of the bend, the upper desired level tolerance limit (h1) being set higher on the side on the inside of the bend than on the side on the outside of the bend, and/or the lower desired value tolerance limit (h2) being set lower on the side on the outside of the bend than on the side on the inside of the bend.

2. Method according to Claim 1, **characterized in that** the lateral acceleration (ay(t)) is determined from wheel speeds, in particular differential values of wheel speeds.

3. Method according to Claim 1, **characterized in that** the lateral acceleration (ay(t)) is determined using a lateral acceleration sensor (2) and/or yaw rate sensor and/or steering angle sensor.

4. Method according to one of the preceding claims, **characterized in that** the dependence of the desired level tolerance limits (h1, h2) on the lateral acceleration (ay(t)) is set by a characteristic curve.

5. Method according to one of the preceding claims, **characterized in that** a larger width (h2-h1) of the desired level tolerance band (h1, h2) is set in the event of higher lateral accelerations (ay(t)).

6. Method according to one of the preceding claims, **characterized in that** the tolerance band (h1, h2) is displaced as a function of the lateral acceleration (ay(t)).

7. Method according to Claim 6, **characterized in that** the desired level tolerance band (h1, h2) is displaced upwards on the side on the inside of the bend and downwards on the side on the outside of the bend.

8. Method according to one of the preceding claims, **characterized in that** a lateral acceleration limit value (ayg) is set, no changes being made to the desired level tolerance limits (h1, h2) in the event of undershooting of the lateral acceleration limit value (ayg), and above the lateral acceleration limit value (ayg) the desired level tolerance limits (h1, h2) being set as a function of the determined lateral acceleration (ay(t)).

## Revendications

1. Procédé de régulation du niveau d'un véhicule à suspension pneumatique (1), dans lequel
des valeurs de niveau (hi) de la carrosserie du véhicule sont détectées et sont régulées à l'intérieur de limites de tolérances de niveau de consigne (h1, h2) par commande de soufflets à air (5),
une accélération transversale (ay(t)) du véhicule (1) étant détectée, et
les limites de tolérances de niveau de consigne (h1, h2) sont fixées en fonction de l'accélération transversale détectée (ay(t)),
**caractérisé en ce que**
du côté du véhicule intérieur à la courbe et du côté du véhicule extérieur à la courbe, on fixe différentes limites de tolérances de niveau de consigne (h1, h2), la limite de tolérance de niveau de consigne supérieure (h1) pour le côté intérieur à la courbe étant fixé plus haut que du côté extérieur à la courbe et/ou la limite de tolérance de niveau de consigne inférieure (h2) du côté extérieur à la courbe étant fixée plus bas que du côté intérieur à la courbe.

2. Procédé selon la revendication 1, **caractérisé en ce que** l'accélération transversale (ay(t)) est déterminée à partir de vitesses de rotation des roues, notamment de valeurs différentielles de vitesses de rotation des roues.

3. Procédé selon la revendication 1, **caractérisé en ce que** l'accélération transversale (ay(t)) est détectée en utilisant un capteur d'accélération transversale (2) et/ou un capteur de vitesse de lacet et/ou un capteur d'angle de direction.

4. Procédé selon l'une quelconque des revendications précédentes, **caractérisé en ce que** la dépendance des limites de tolérances de niveau de consigne (h1, h2) de l'accélération transversale (ay(t)) est définie par une courbe caractéristique.

5. Procédé selon l'une quelconque des revendications précédentes, **caractérisé en ce que** pour des accélérations transversales relativement importantes (ay(t)), on fixe une plus grande largeur (h2-h2) de la plage de tolérances de niveau de consigne (h1, h2).

6. Procédé selon l'une quelconque des revendications précédentes, **caractérisé en ce que** la plage de tolérances (h1, h2) est décalée en fonction de l'accélération transversale (ay(t)).

7. Procédé selon la revendication 6, **caractérisé en ce que** la plage de tolérance de niveau de consigne (h1, h2) est décalée vers le haut du côté intérieur à la courbe et est décalée vers le bas du côté extérieur à la courbe.

8. Procédé selon l'une quelconque des revendications précédentes, **caractérisé en ce qu'**une valeur limite d'accélération transversale (ayg) est fixée, et en dessous de cette valeur limite d'accélération transversale (ayg), aucune variation des limites de tolérances de niveau de consigne (h1, h2) n'a lieu, et au-dessus de cette valeur limite d'accélération transversale (ayg), les limites de tolérances de niveau de consigne (h1, h2) sont fixées en fonction de l'accélération transversale déterminée (ay(t)).
